# EUROPÄISCHE PATENTSCHRIFT

(11) **EP 0 597 192 B1**
(45) Veröffentlichungstag und Bekanntmachung des Hinweises auf die Patenterteilung: **23.10.1996**
(21) Anmeldenummer: 93112857.3
(22) Anmeldetag: 11.08.1993
(51) Int. Cl.: H04L 9/32

(54) **Verfahren zur Ermöglichung der nachträglichen Überprüfung bereits übermittelter Daten**
Method for enabling later verification of already transmitted data
Procédé permettant une vérification ultérieure de données déjà transmises

(30) Priorität: 09.10.1992 DE 4234165
(43) Veröffentlichungstag der Anmeldung: 18.05.1994
(73) Patentinhaber: DeTeMobil Deutsche Telekom MobilNet GmbH, D-53227 Bonn (DE)
(72) Erfinder: Lukat, Jörg, Dipl.-Inform., D-53227 Bonn (DE); Löhmann, Ekkehard, Dipl.-Math., D-53639 Königswinter (DE)
(74) Vertreter: Riebling, Peter, Dr.-Ing., Patentanwalt

(56) Entgegenhaltungen:
- EP-A- 0 281 223

## Beschreibung

Aus der europäischen Offenlegungsschrift EP 0 281 223 A2 ist es bekannt, daß zur Prüfung eventueller Beschwerden hinsichtlich der Korrektheit von übermittelten Daten eine Kopie dieser übermittelten Daten für eine bestimmte Zeitdauer von der übermittelnden Instanz gespeichert wird. Diese Datenkopie in der übermittelnden Instanz wird erst dann gelöscht, wenn eine Bestätigung der Korrektheit der übermittelten Daten durch die Gegeninstanz erfolgt. Nach Löschung der Daten in der übermittelnden Instanz ist keine weitere Datenüberprüfung mehr möglich.

Der Nachteil dieses Verfahrens liegt in dem enormen Kostenaufwand, der für die Speicherung und Erhaltung der Daten betrieben werden muß. Zum einen fallen Kosten für die Speicherung (Lager, Geräte usw.) während des Zeitraumes der Datenerhaltung an, zum anderen stellen Maßnahmen, die zur Sicherung der Daten gegen Verlust und Mißbrauch getroffen werden müssen, einen erheblichen Kostenfaktor dar.

Der Erfindung liegt deshalb die Aufgabe zugrunde, ein Verfahren zur nachträglichen Überprüfung bereits übermittelter Daten auf Integrität und Authentizität vorzuschlagen, das wesentlich kostengünstiger als bekannte Verfahren arbeitet, dabei aber nicht datenschutzrechtliche Bestimmungen verletzt.

Die Aufgabe wird durch die Merkmale der Patentansprüche 1 oder 2 gelöst.

Das erfindungsgemäße Verfahren beruht auf der Anwendung kryptographischer Verfahren zur Überprüfung der Integrität und der Authentizität bereits übermittelter, inzwischen gelöschter personenbezogener Daten. An diesem Verfahren sind mindestens zwei Instanzen beteiligt. Auf der übermittelnden Seite sitzt die Instanz A, die die Daten an eine zweite Instanz B übermittelt. Bevor die Übermittlung und das darauffolgende Löschen der Daten durch die Instanz A stattfindet, berechnet diese eine kryptographische Prüfsumme der Daten. Das Ergebnis der Berechnung der kryptographischen Prüfsumme hängt sowohl von den Daten selbst als auch von einem geheimen Schlüssel Ks ab. Zur Berechnung der kryptographischen Prüfsumme wird eine Einwegfunktion angewendet, was bedeutet, daß aus der kryptographischen Prüfsumme und dem geheimen Schlüssel Ks die Daten nicht wiedergewonnen werden können. Trotzdem kann bei erneuter Vorlage der Daten anhand der kryptographischen Prüfsumme und des geheimen Schlüssels Ks die Integrität und Authentizität der Daten überprüft werden.

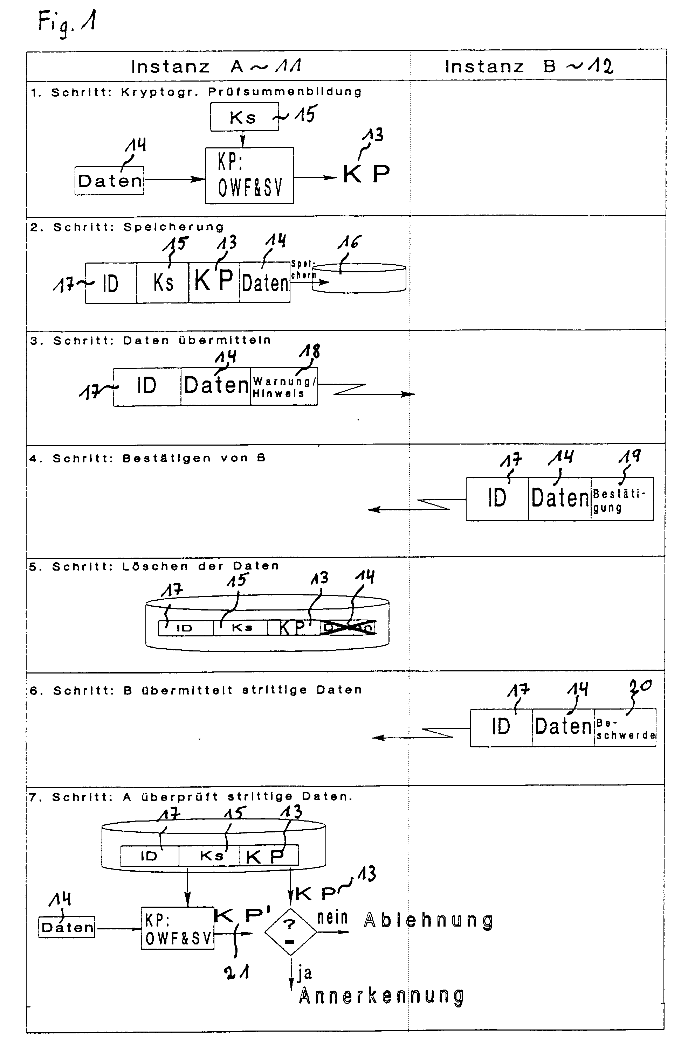

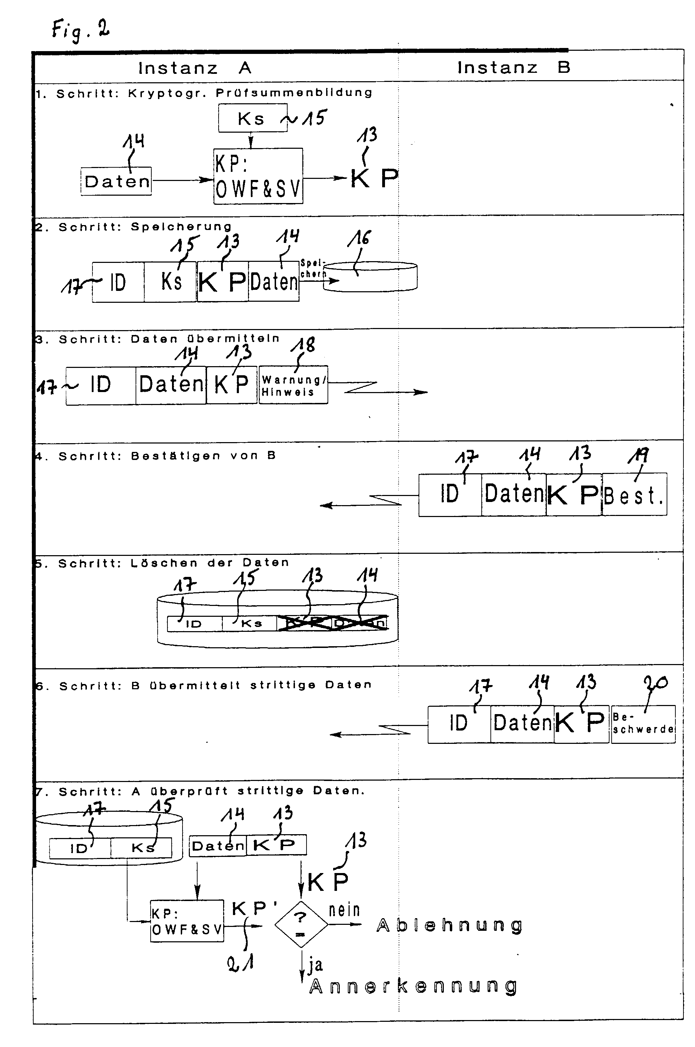

Ein Beispiel des erfindungsgemäßen Verfahrens wird im folgenden anhand der **Figur 1** näher erläutert. Die zu übermittelnden Daten, sind bei der Instanz A **(11)** gespeichert. Bevor eine Übermittlung der betreffenden Daten an die Instanz B **(12)** erfolgt, berechnet die Instanz A die kryptographische Prüfsumme KP **(13)** der Daten **(14)** in Abhängigkeit von dem geheimen Schlüssel Ks **(15)**. Danach speichert **(16)** die Instanz A die Daten, die kryptographische Prüfsumme KP und den geheimen Schlüssel Ks unter einer Zugriffsadresse ID **(17)** ab. Bei Bedarf übermittelt die Instanz A an die Instanz B die gewünschten Daten sowie die Zugriffsadresse ID mit dem Hinweis **(18)**, daß die Daten gelöscht werden, sobald die Instanz B den unverfälschten Empfang bestätigt **(19)**, und daß die Daten von der Instanz A nicht rekonstruiert werden können, sondern daß nur bei Vorlage der Zugriffsadresse ID und der Daten die Integrität und die Authentizität der Daten geprüft werden kann. Nachdem die Instanz B der Instanz A den unverfälschten Empfang der Daten bestätigt hat, löscht die Instanz A die unter der Zugriffsadresse ID gespeicherten Daten wobei die kryptographische Prüfsumme KP und der geheime Schlüssel Ks weiterhin bei der Instanz A gespeichert bleiben. Kommt es nun gegenüber der Instanz B zu einer Beschwerde (20) über die Korrektheit der Daten, legt die Instanz B der Instanz A die strittigen Daten und die zugehörige Zugriffsadresse ID vor. Instanz A berechnet unter Berücksichtigung des unter der Zugriffsadresse ID gespeicherten geheimen Schlüssels Ks die kryptographische Prüfsumme KP' **(21)** der vorgelegten Daten. Stimmt die kryptographische Prüfsumme KP' der vorgelegten Daten mit der bei der Instanz A unter der Zugriffsadresse ID gespeicherten kryptographischen Prüfsumme KP bitgenau überein, so werden die vorgelegten Daten als integer und authentisch anerkannt. Instanz A kann jetzt wie gewohnt die Beschwerde weiterverfolgen.
Eine Variante zu dem eben beschriebenen Verfahren wird in **Figur 2** erläutert. Wie bei dem ersten Verfahren berechnet die Instanz A **(11)** die kryptographische Prüfsumme KP **(13)** der Daten **(14)** in Abhängigkeit von dem geheimen Schlüssel Ks **(15)** und speichert die Daten, die kryptographische Prüfsumme KP und den geheimen Schlüssel Ks unter einer Zugriffsadresse ID **(17)** ab. Im Gegensatz zu dem oben beschriebenen Verfahren übermittelt die Instanz A an die Instanz B die Daten, die kryptographische Prüfsumme KP und die Zugriffsadresse ID aber diesmal mit dem Hinweis **(18)** das die Daten und die kryptographische Prüfsumme KP gelöscht werden, sobald die Instanz B den unverfälschten Empfang bestätigt, und daß die Daten von der Instanz A nicht rekonstruiert werden können, sondern daß nur bei Vorlage der Zugriffsadresse ID, der Daten und der kryptographischen Prüfsumme KP die Integrität und die Authentizität der Daten bestätigt werden kann. Nachdem die Instanz B der Instanz A den unverfälschten Empfang der Daten und der kryptographischen Prüfsumme KP bestätigt hat **(19)**, löscht die Instanz A sowohl die unter der Zugriffsadresse ID gespeicherten Daten als auch die kryptographische Prüfsumme KP. Nur der geheime Schlüssel Ks bleibt weiterhin bei der Instanz A gespeichert. Kommt es nun zum Beschwerdefall **(20)**, legt Instanz B der Instanz A die strittigen Daten, die zugehörige kryptographische Prüfsumme KP und die zugehörige Zugriffsadresse ID vor. Instanz A berechnet nun unter Berücksichtigung des unter der Zugriffsadresse ID gespeicherten geheimen Schlüssels Ks die kryptographische Prüfsumme KP'**(21)** der vorgelegten Daten. Stimmt die berechnete kryptographische Prüfsumme KP' der vorgelegten Daten mit der von Instanz B vorgelegten kryptographischen Prüfsumme KP bitgenau überein, so werden die vorgelegten Daten als integer und authentisch anerkannt. Instanz A kann jetzt wie gewohnt die Beschwerde weiterverfolgen.

Für die Berechnung der kryptographischen Prüfsumme können verschiedene kryptographische Verfahren herangezogen werden. Die kryptographische Prüfsumme kann z.B. durch die Berechnung eines MACs (Message Authentication Code) gebildet werden, wobei in diesem Fall der für die Erzeugung des MACs benötigte geheime Schlüssel bei der Instanz A und nur bei ihr gespeichert wird. Dies ist der Unterschied zur Verwendung des MACs im herkömmlichen Sinn, bei der ja die Daten (Message) zwischen zwei Kommunikationspartnern ausgetauscht werden, die beide über den geheimen Schlüssel verfügen müssen. Dadurch ist auch kein Schlüsselmanagement erforderlich, da die erzeugende und die überprüfende Instanz ein und dieselbe Instanz ist.
Eine zweite Möglichkeit besteht darin, die kryptographische Prüfsumme durch die Berechnung einer digitalen Unterschrift zu bilden. Wenn es für die weitere Beschwerdebearbeitung erforderlich ist einem Dritten zu beweisen, daß die strittigen Daten so übermittelt worden sind oder eben nicht, so ist es notwendig die kryptographische Prüfsumme mittels eines Signaturverfahrens mit asymmetrischen Schlüsseln zu berechnen. Hierzu muß der Beschwerdeführer und der urteilende Dritte natürlich Kenntnis von dem öffentlichen Schlüssel des Senders haben.

Ein Ausführungsbeispiel erläutert die Erfindung. In den D-Netzen werden Mobilfunkdienste den Teilnehmern durch Dienstanbieter angeboten, die eigene Kundenverträge mit Teilnehmern unterhalten und eigene Rechnungen über die in Anspruch genommenen Dienste schreiben.

Um dies zu ermöglichen, ist es erforderlich, daß der Netzbetreiber die Verbindungsdaten der Kunden seiner Dienstanbieter an den jeweiligen Dienstanbieter zum Zweck der Entgeltermittlung und Entgeltabrechnung seiner Kunden übermittelt. Durch das deutsche Recht wird dem Kunden die Wahl gegeben, ob seine Verbindungsdaten nach Versendung der Entgeltrechnung vollständig gelöscht, unter Verkürzung der Zielrufnummer um die letzten drei Ziffern für 80 Tage gespeichert oder vollständig für 80 Tage gespeichert werden sollen. Diese Vorschrift betrifft insbesondere die Verbindungsdaten, die der Netzbetreiber und der Dienstanbieter für seine eigenen Kunden zum Zwecke der Beschwerdebearbeitung speichert, aber auch die Verbindungsdaten, die für die Abrechnung bzw. Beschwerdebearbeitung des Netzbetreibers mit dem Dienstanbieter bzw. durch den Netzbetreiber erforderlich sind. D.h., der Netzbetreiber muß auch die Verbindungsdaten der Kunden seiner Dienstanbieter entsprechend deren Wahl selektiv löschen. Dieses rechenintensive selektive Löschen der Verbindungsdaten kann durch Anwendung des oben beschriebenen Verfahrens in der Weise vermieden werden, daß der Netzbetreiber zu jedem Verbindungsdatensatz eines Kunden seines Dienstanbieters die kryptographische Prüfsumme berechnet.
Unter der Vorraussetzung, daß die letzten drei Ziffern der Zielrufnummer des Verbindungsdatensatzes für die Abrechnung des Netzbetreibers mit dem Dienstanbieter unerheblich ist, ist es ausreichend, eine kryptographische Prüfsumme 1 über den Verbindungsdatensatz mit Ausnahme der letzten drei Ziffern der Zielrufnummer zu bilden; andernfalls ist es notwendig, eine weitere kryptographische Prüfsumme 2 über den gesamten Verbindungsdatensatz zu bilden. Der Netzbetreiber übermittelt wie gewohnt die Verbindungsdatensätze an den Dienstanbieter, speichert nach Bestätigung des unverfälschten Empfangs unter der Zugriffsadresse ID den geheimen Schlüssel Ks und die kryptographische Prüfsumme 1 (ggf. die kryptographische Prüfsumme 2) für die Dauer der Beschwerdefrist und löscht den eigentlichen Verbindungsdatensatz. Da der Netzbetreiber die datenschutzrechtlichen sensiblen Verbindungsdaten insgesamt gelöscht hat, kann er auf das selektive Löschen nach Wahl des Kunden des Dienstanbieters verzichten. Beschwert sich ein Kunde eines Dienstanbieters über seine Fernmelderechnung, so kann der Netzbetreiber die Prüfung der Integrität und Authentizität den dem Dienstanbieter verbliebenen und zur Beschwerdeverfolgung an ihn zurückübermittelten strittigen Daten, wie oben beschrieben, anhand der gespeicherten Werte kryptographische Prüfsumme 1 bzw. kryptographische Prüfsumme 2 durchführen und wie gewohnt verfolgen.

Das Verfahren läßt sich in den beiden Varianten auch auf nicht elektronische Dokumente anwenden. In diesem Fall werden der Instanz B die Daten und gegebenenfalls die kryptographische Prüfsumme zum Beispiel in Form eines Aktenzeichens in einem Papierbrief übermittelt. Im Beschwerdefall wird der strittige Datensatz und gegebenenfalls die kryptographische Prüfsumme aus den Angaben der Instanz B und dem Aktenzeichen wiedergewonnen, und die Überprüfung kann wieder auf elektronischem Weg, wie bisher beschrieben, erfolgen.

## Patentansprüche

1. Verfahren zur Ermöglichung der nachträglichen Überprüfung bereits übermittelter Daten (14) ohne die Erforderlichkeit, diese Daten (14) für eine spätere Überprüfung in der übermittelnden Instanz (11) zu speichern, **dadurch gekennzeichnet**, daß
die übermittelnde Instanz (11) vor der ersten Übermittlung eine kryptographische Prüfsumme (13) der Daten (14), unter Anwendung der Daten (14) und eines geheimen Schlüssels (15), berechnet und
diese kryptographische Prüfsumme (13) unter einer Zugriffsadresse (17) abspeichert, wobei
nach der Übermittlung der Daten (14) und der Zugriffsadresse (17) an mindestens eine weitere Instanz (12) die übermittelten Daten (14) in der übermittelnden Instanz (11) unrekonstruierbar gelöscht werden, und daß
durch Speicherung des Schlüssels (15), der Zugriffsadresse (17) und der kryptographischen Prüfsumme (13) in der übermittelnden Instanz (11) und nach einer Rückübertragung der Daten (14) und der Zugriffsadresse (17) an die übermittelnde Instanz (11) eine zweite kryptographische Prüfsumme (21) über die rückübermittelten Daten (14) unter Anwendung des geheimen Schlüssels (15) erneut von der übermittelnden Instanz (11) berechnet wird, wobei
dann beim Vergleich der zweiten kryptographischen Prüfsumme (21) mit der zuerst errechneten kryptographischen Prüfsumme (13) und Übereinstimmung der beiden berechneten kryptographischen Prüfsummen (13; 21) die Authentizität und Integrität der Daten (14) festgestellt wird.

2. Verfahren zur Ermöglichung der nachträglichen Überprüfung bereits übermitteltere Daten (14) ohne die Erforderlichkeit, diese Daten (14) für eine spätere Überprüfung in der übermittelnden Instanz (11) zu speichern, **dadurch gekennzeichnet**, daß
die übermittelnde Instanz (11) vor der ersten Übermittlung eine kryptographische Prüfsumme (13) der Daten (14), unter Anwendung der Daten (14) und eines geheimen Schlüssels (15), berechnet und
diese kryptographische Prüfsumme (13) unter einer Zugriffsadresse (17) abspeichert, wobei
nach der Übermittlung der Daten (14), der Zugriffsadresse (17) und der kryptographischen Prüfsumme (13) an mindestens eine weitere Instanz (12) die übermittelten Daten (14) und die kryptographische Prüfsumme (13) in der übermittelnden Instanz (11) unrekonstruierbar gelöscht werden, und daß durch Speicherung des Schlüssels (15) und der Zugriffsadresse (17)) in der übermittelnden Instanz (11) und nach einer Rückübertragung der Daten (14), der Zugriffsadresse (17) und der kryptographischen Prüfsumme (13) an die übermittelnde Instanz (11) eine zweite kryptographische Prüfsumme (21) über die rückübermittelten Daten (14) unter Anwendung des geheimen Schlüssels (15) erneut von der übermittelnden Instanz (11) berechnet wird, wobei
dann beim Vergleich der zweiten kryptographischen Prüfsumme (21) mit der zuerst errechneten kryptographischen Prüfsumme (13) und Übereinstimmung der beiden berechneten kryptographischen Prüfsummen (13; 21) die Authentizität und Integrität der Daten (14) festgestellt wird.

3. Verfahren nach Anspruch 1 oder 2, **dadurch gekennzeichnet**, daß die jeweiligen kryptographischen Prüfsummen (13; 21) mittels einer Einwegfunktion berechnet werden.

4. Verfahren nach Anspruch 3, **dadurch gekennzeichnet**, daß die Einwegfunktion anhand eines MACs (Message Authentication Code) gebildet wird.

5. Verfahren nach Anspruch 4, **dadurch gekennzeichnet**, daß der für die Erzeugung des MACs benötigte geheime Schlüssel (15) in der übermittelnden Instanz (11) gespeichert wird, und nur bei dieser.

6. Verfahren nach einem der Ansprüche 1 - 5, **dadurch gekennzeichnet**, daß nur die übermittelnde Instanz (11) den geheimen Schlüssel kennt und dadurch gleichzeitig sowohl die erzeugende Instanz der kryptograpischen Prüfsummen (13; 21) ist als auch die Instanz für die Überprüfung der Daten auf Integrität und Authentizität darstellt.

7. Verfahren nach einem der Ansprüche 1 - 6, **dadurch gekennzeichnet**, daß die kryptograpischen Prüfsummen (13; 21) durch Berechnung einer digitalen Unterschrift gebildet werden.

8. Verfahren nach einem der Ansprüche 1 - 7, **dadurch gekennzeichnet**, daß die Übermittlung der Daten (14) sowie der weiteren übertragenen Informationen (13; 17) auf elektronische oder nicht elektronische Weise erfolgt.

## Claims

1. A method for making possible the subsequent checking of data (14), which have already been transmitted, without the necessity of storing these data (14) for a later checking in the transmitting stage (11), characterised in that
the transmitting stage (11) calculates a cryptographic test sum (13) of the data (14) before the first transmission, using the data (14) and a secret key (15), and stores this cryptographic test sum (13) under an access address (17), in which after the transmission of the data (14) and the access address (17) to at least one further stage (12), the transmitted data (14) in the transmitting stage (11) are cancelled so as to be unable to be reconstructed and in that
by storage of the key (15), the access address (17) and the cryptographic test sum (13) in the transmitting stage (11) and after a return transfer of the data (14) and the access address (17) to the transmitting stage (11), a second cryptographic test sum (21) is calculated again by the transmitting stage (11) from the data (14) which have been transmitted back, using the secret key (15), the authenticity and integrity of the data (14) then being established, on a comparison of the second cryptographic test sum (21) with the cryptographic test sum (13) which was first calculated, and on coinciding of the two calculated cryptographic test sums (13;21).

2. A method for making possible the subsequent checking of data (14) which have already been transmitted, without the necessity of storing these data (14) for later checking in the transmitting stage (11), characterised in that
the transmitting stage (11) calculates a cryptographic test sum (13) of the data (14) before the first transmission, using the data (14) and a secret key (15) and stores this cryptographic test sum (13) under an access address (17), in which after the transmission of the data (14), the access address (17) and the cryptographic test sum (13) to at least one further stage (12), the transmitted data (14) and the cryptographic test sum (13) in the transmitting stage (11) are cancelled so as to be unable to be reconstructed, and in that
by storing the key (15) and the access address (17) in the transmitting stage (11) and after a return transfer of the data (14), the access address (17) and the cryptographic test sum (13) to the transmitting stage (11), a second cryptographic test sum (21) is calculated again by the transmitting stage (11) from the data (14) which have been transmitted back, using the secret key (15), the authenticity and integrity of the data (14) then being established, on comparison of the second cryptographic test sum (21) with the cryptographic test sum (13) first calculated and coinciding of the two calculated cryptographic test sums (13;21).

3. A method according to Claims 1 or 2, characterised in that the respective cryptographic test sums (13;21) are calculated by means of a one-way function.

4. A method according to Claim 3, characterised in that the one-way function is formed by means of a MAC (Message Authentication Code).

5. A method according to Claim 4, characterised in that the secret key (15) required for the production of the MAC is stored in the transmitting stage (11), and only therein.

6. A method according to one of Claims 1-5, characterised in that only the transmitting stage (11) knows the secret key and thereby at the same time is both the generating stage of the cryptographic test sums (13; 21) and also the stage for the checking of the data for integrity and authenticity.

7. A method according to one of Claims 1-6, characterised in that the cryptographic test sums (13;21) are formed by calculation of a digital signature.

8. A method according to one of Claims 1-7, characterised in that the transmission of the data (14) and also of the further transferred information (13;17) takes place in an electronic or non-electronic manner.

## Revendications

1. Procédé pour permettre la vérification ultérieure de données (14) déjà transmises sans qu'il soit nécessaire de stocker ces données (14) dans l'instance de transmission (11) pour une vérification ultérieure, **caractérisé en ce que** l'instance de transmission (11) calcule, avant la première transmission, une somme de contrôle cryptographique (13) des données (14) en utilisant les données (14) et une clé secrète (15), et met en mémoire cette somme de contrôle cryptographique (13) à une adresse d'accès (17), étant précisé qu'après la transmission des données (14) et de l'adresse d'accès (17) à au moins une autre instance (12), les données transmises (14) sont effacées dans l'instance de transmission (11) de façon non restituable, **et en ce que** grâce à la mise en mémoire de la clé (15), de l'adresse d'accès (17) et de la somme de contrôle cryptographique (13) dans l'instance de transmission (11) et après une réinjection des données (14) et de l'adresse d'accès (17) dans l'instance de transmission (11), une seconde somme de contrôle cryptographique (21) est calculée par l'instance de transmission (11), à l'aide de la clé secrète (15), grâce aux données (14) retransmises, l'authenticité et l'intégrité des données (14) étant constatées lors de la comparaison entre la seconde somme de contrôle cryptographique (21) et la somme de contrôle cryptographique calculée en premier (13), dans le cas d'une concordance des deux sommes de contrôle cryptographiques (13;21) calculées.

2. Procédé pour permettre la vérification ultérieure de données (14) déjà transmises sans qu'il soit nécessaire de stocker ces données (14) dans l'instance de transmission (11) pour une vérification ultérieure, **caractérisé en ce que** l'instance de transmission (11) calcule, avant la première transmission, une somme de contrôle cryptographique (13) des données (14) en utilisant les données (14) et une clé secrète (15), et met en mémoire cette somme de contrôle cryptographique (13) à une adresse d'accès (17), étant précisé qu'après la transmission des données (14), de l'adresse d'accès (17) et de la somme de contrôle cryptographique (13) à au moins une autre instance (12), les données (14) transmises et la somme de contrôle cryptographique (13) sont effacées dans l'instance de transmission (11) de façon non restituable, **et en ce que** grâce à la mise en mémoire de la clé (15) et de l'adresse d'accès (17) dans l'instance de transmission (11) et après une réinjection des données (14), de l'adresse d'accès (17) et de la somme de contrôle cryptographique (13) dans l'instance de transmission (11), une seconde somme de contrôle cryptographique (21) est calculée par l'instance de transmission (11), à l'aide de la clé secrète (15), grâce aux données (14) retransmises, l'authenticité et l'intégrité des données (14) étant constatées lors de la comparaison entre la seconde somme de contrôle cryptographique (21) et la somme de contrôle cryptographique calculée en premier (13), dans le cas d'une concordance des deux sommes de contrôle cryptographiques (13;21) calculées.

3. Procédé selon la revendication 1 ou 2, caractérisé en ce que les sommes de contrôle cryptographiques respectives (13;21) sont calculées à l'aide d'une fonction unidirectionnelle.

4. Procédé selon la revendication 3, caractérisé en ce que la fonction unidirectionnelle est formée à l'aide d'un MAC (code d'authentification de message).

5. Procédé selon la revendication 4, caractérisé en ce que la clé secrète (15) nécessaire pour générer le MAC est mise en mémoire dans l'instance de transmission (11) uniquement.

6. Procédé selon l'une des revendications 1 à 5, caractérisé en ce que l'instance de transmission (11) est la seule à connaître la clé secrète et constitue donc en même temps l'instance génératrice des sommes de contrôle cryptographiques (13;21) et l'instance prévue pour vérifier l'intégrité et l'authenticité des données.

7. Procédé selon l'une des revendications 1 à 6, caractérisé en ce que les sommes de contrôle cryptographiques (13;21) sont formées par le calcul d'une signature numérique.

8. Procédé selon l'une des revendications 1 à 7, caractérisé en ce que la transmission des données (14) et des autres informations transférées (13;17) se fait par voie électronique ou non électronique.
